# EUROPEAN PATENT SPECIFICATION

(11) **EP 0 594 141 B1**
(45) Date of publication and mention of the grant of the patent: **02.02.2000**
(21) Application number: 93116898.3
(22) Date of filing: 19.10.1993
(51) Int. Cl.: G11B 21/10, G11B 15/467, G11B 5/588

(54) **Information reproducing apparatus**
Datenwiedergabegerät
Appareil de reproduction d'information

(30) Priority: 23.10.1992 JP 28576792; 30.10.1992 JP 29245792
(43) Date of publication of application: 27.04.1994
(73) Proprietor: MATSUSHITA ELECTRIC INDUSTRIAL CO., LTD., Kadoma-shi, Osaka-fu, 571 (JP)
(72) Inventor: Sakakibara, Yoshio, Osaka 572 (JP); Gotou, Makoto, Hyogo 663. (JP); Isaka, Haruo, Kyoto 614 (JP)
(74) Representative: Grünecker, Kinkeldey, Stockmair & Schwanhäusser Anwaltssozietät

(56) References cited:
- EP-A- 0 046 341
- EP-A- 0 394 457
- PATENT ABSTRACTS OF JAPAN vol. 012 no. 151 (P-699) ,11 May 1988 & JP-A-62 267956 (FUJITSU TEN LTD) 20 November 1987,
- PATENT ABSTRACTS OF JAPAN vol. 015 no. 331 (P-1241) ,22 August 1991 & JP-A-03 120609 (MITSUBISHI ELECTRIC CORP) 22 May 1991,

## Description

The present invention relates to an information reproducing apparatus for reproducing picture, sound, data, and other information signals recorded on slanted tracks across a magnetic recording medium, and more particularly to an information reproducing apparatus for reproducing information recorded on narrow slanted tracks formed by high density helical scanner machines.

At present, information recording and reproduction apparatuses represented with a video tape recorder (VTR), which use magnetic tape as a recording medium and form slanted tracks across the magnetic tape by using rotary magnetic heads, generalize and are widely being used in home recreation, business, broadcasting, information processing, and other fields. In such apparatus, in order to reproduce the information stably from the recording tracks, and for compatibility between apparatuses, tracking control is required so that the magnetic reproducing head can scan correctly on the recording tracks. For this purpose, in a very popular VTR, aside from the slant tracks, there is a control track which records the control signal in the relative position defined in relation to the slant tracks, in the lower edge of the magnetic tape, and the tracking control is effected by using it. In this method, however, since the positional deviation between the control pulses recorded on the control track and the oblique track could not be eliminated completely, it was necessary to adjust the deviated portion manually. In a slightly expensive VTR, to eliminate such trouble, a method of adjusting it automatically is employed. That is, by detecting the envelope of the reproduced signal, the tracking phase where the envelope reaches the maximum is sought while slightly shifting the tracking phase, and scanning of the magnetic head is locked to that phase. At this time, in other method, sampling the envelopes at plural points of one track, the tracking is controlled by detecting the phase in which the minimum value of these sampling values is maximized. Problems with these conventional tracking methods are that an appropriate reproduction state is not reached promptly because it takes time to find the optimum on-track phase, and that it requires the means for detecting the envelope of the reproduced signal in addition to the means for ordinary tracking control. In the rotary head digital audio tape recorder (R-DAT), an area for automatic track following (ATF) recording the signal for detecting the tracking information is provided in the slant track, and tracking is controlled by using it, which is known as the ATF system. In this method, the tracking servo circuit operates to set on track automatically, and manual adjustment is not needed.

Incidentally, to achieve the high density recording of which necessity is mounting more and more henceforth, it is an important approach to heighten the recording density by narrowing the pitch of slant tracks on the magnetic tape. In this case, as the track pitch becomes narrower, the effect of bending of tracks caused by mechanical factors becomes less ignorable. That is, the slant track recording on the magnetic tape meanders against scanning of the magnetic head, and the normal recorded signal cannot be reproduced from the magnetic head.

A tracking servo circuit, as described in JP-A-622 679 56, generates an appropriate off-set voltage, when a track centre error is larger than a track mean error, thereby suppressing an increase of a track error.

One of the techniques for improving the reproduction quality in such circumstance is to correct the tracking phase by providing tracks recording the tracking information on the tape at plural points in one track, and by obtaining the track bending information therefrom when reproducing. Such technique is the control to nullify the mean of the tracking errors, and it is effective in the case of reproduction of analog information because the mean S/N is improved, but in the case of reproduction of digital information, lowering of S/N may reach a region in which error cannot be corrected in certain points, and since it is the technique of correcting the tracking phase by some information representing the track bending, optimum track phase cannot be always set from the viewpoint of recording and reproducing of digital signals.

It is desirable to provide an information reproducing apparatus reproducing a signal which is less affected by bending of recording tracks, when reproducing the signal from the magnetic tape, being realized in a simple manner.

This is achieved by the features of claims 1, 2 and 3 respectively.

Hence, when reproducing the information on the tape in which the effect of the track bending is relatively increased due to narrowing of track, a better reproduced signal quality is given, and the information reproducing apparatus capable of stably reproducing the information on the tape medium recorded at high density is presented.

The invention will be better understood and appreciated from the following detailed description taken in conjunction with the accompanying drawings.
Fig. 1 is a block diagram of an information reproducing apparatus in an embodiment of the invention.
Fig. 2 is a pattern diagram of information recording track in the same embodiment.
Fig. 3 is a timing chart for explaining the operation of the embodiment.
Fig. 4 is a schematic diagram showing the constitution of a tracking error detector 2 shown in Fig. 1.
Fig. 5 is a block diagram of a microcomputer constituting a control signal generator 3 shown in Fig. 1.
Fig. 6 is a flow chart of the error signal generating procedure in the embodiment.
Fig. 7 is a flow chart of an error signal generating procedure in another embodiment of the invention.
Fig. 8 is a flow chart of an error signal generating procedure in a different embodiment of the invention.
Fig. 9 is a waveform diagram for explaining the operation of tracking control of the invention.
Fig. 10 is a schematic diagram for explaining the tracking state of the head of the invention.

Referring now to the drawings, an information reproducing apparatus in an embodiment of the invention is described in detail below.

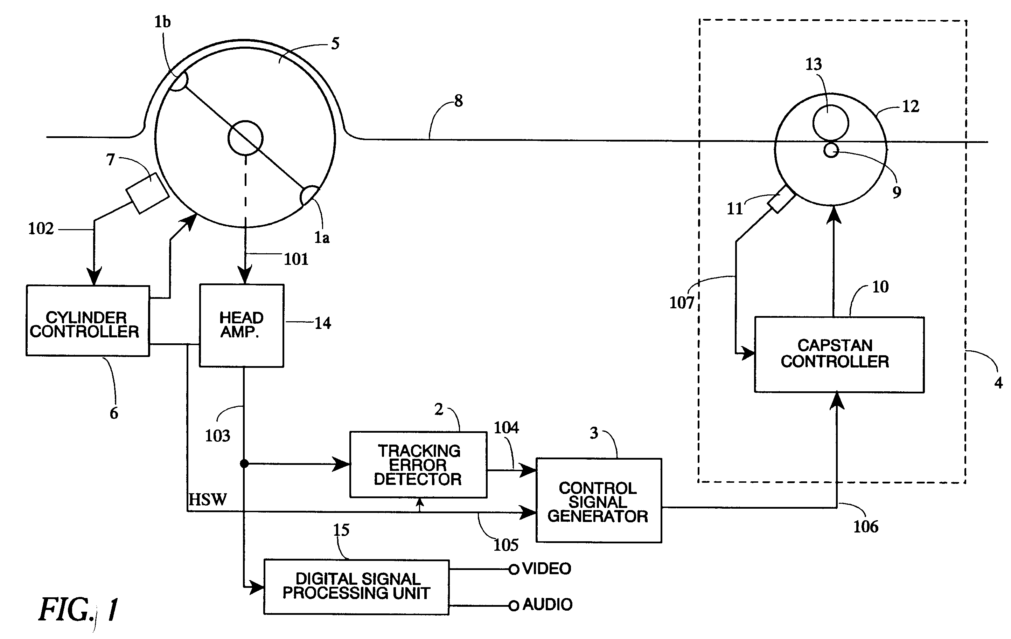

Fig.1 is a block diagram showing the constitution of an information reproducing apparatus in one of the embodiments of the invention. The constitution of this embodiment is explained. Numerals 1a, 1b are magnetic heads (heads) having mutually different azimuth angles, and are mounted on 180° confronting positions on a cylinder 5. The cylinder 5 contains a motor, which is not shown, for rotating it. Numeral 6 denotes a cylinder controller, and it controls the rotation of the cylinder 5 on the basis of a rotational speed and phase signal 102 from a rotational detector 7. Numeral 14 is a head amplifier for amplifying a head reproduced output signal 101, 2 is a tracking error detector, and 3 is a control signal generator. Numeral 9 is a capstan, 12 is a capstan motor directly coupled with the capstan, and 13 is a pinch roller. A magnetic tape 8 is placed between the capstan 9 and pinch roller 13, and is traveled in the longitudinal direction by the rotation of the capstan. The tape 8 is also wrapped about the cylinder 5 over about 180° , and is scanned in a helix to the tape traveling direction by the rotating heads 1a, 1b. Numeral 10 denotes a capstan controller, which adjusts the rotation of the capstan motor 12 on the basis of a rotational speed signal 107 from a rotational detector 11, and controls the rotational speed of the capstan 9. A block 4 enclosed by broken line composes a tracking controller. Numeral 15 is a digital signal processing unit, which demodulates the output of the head amplifier 14 into video signal and audio signal.

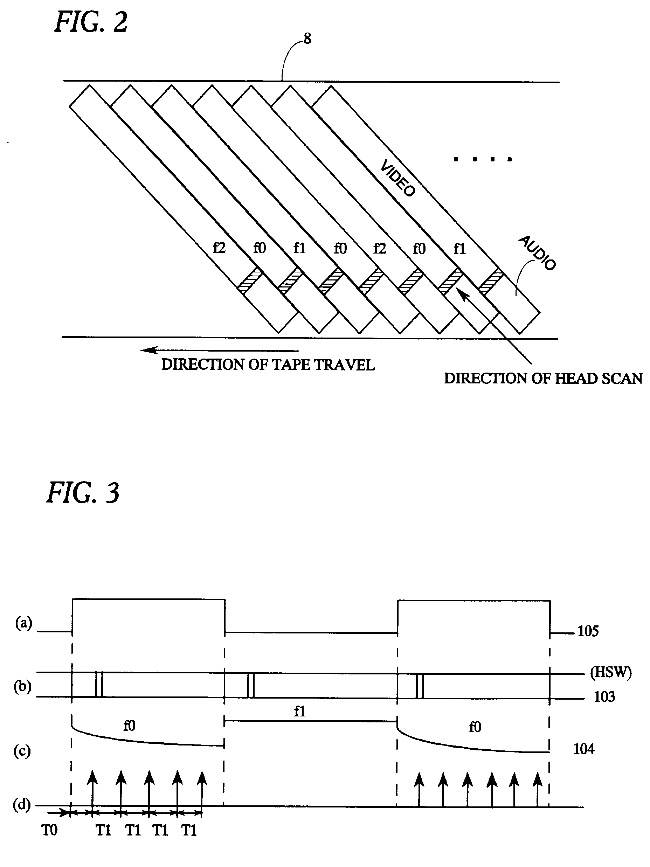

The operation of the embodiment in Fig. 1 is explained. The capstan 9 is controlled to rotate at a specific speed by the capstan controller 10. The tape 8 is traveled at a specific speed by the capstan 9. The cylinder 5 is controlled at specific rotational speed and rotational phase by the cylinder controller 6. The heads 1a, 1b scan the tape 8 successively in the direction by the rotation of the cylinder 5, and reproduce the signal from the information track formed in the diagonal direction on the tape 8. The cylinder controller 6 distinguishes which one of the heads 1a, 1b is scanning the tape 8 from the rotational speed and phase signal 102, and generates the distinguishing signal (HSW) 105. The HSW signal 105 is a binary signal as shown in Fig. 3 (a), and indicates that the head 1a is scanning the tape 8 in the period of high level, and that the head 1b is scanning in the period of low level. The output signals of the heads 1a, 1b are selected at the tape 8 scanning side by the HSW signal 105, and amplified by the head amplifier 14, and a reproduced signal 103 is generated.

Fig. 2 is a diagram showing the array of information slant tracks recorded on the tape 8 shown in Fig. 1. The information tracks are formed adjacently to each other without guard band, and each information track is composed of two regions divided by a gap for the editing purpose as indicated by shaded area. In each region, digitized audio signals and video signals are recorded together with an error correction code. Over the entire tracks, moreover, pilot signals for tracking are recorded by frequency multiplex in the principal information of audio and video signals. Across the track without pilot signal recording indicated by numeral f0, pilot signals of two different frequencies f1, f2 are alternately recorded. Meanwhile, the track of the pilot signal f0 is recorded at the same azimuth angle as the head 1a, while the recorded tracks of pilot signals of f1, f2 are recorded at the same azimuth angle as the head 1b. The method of superposing the pilot signals on the digital signals is disclosed, for example, in the European Patent Publication No. 339724, and the explanation is omitted herein.

By using the reproduced signal 103 obtained from the track on thus formed tape, the tracking error detector 2 detects the deviation of the head and track, and produces a tracking error signal 104. More specifically, while the head 1a scans the track of f0, components of pilot signals f1, f2 leaking in from the adjacent right and left tracks are detected and compared, and the deviation is detected.

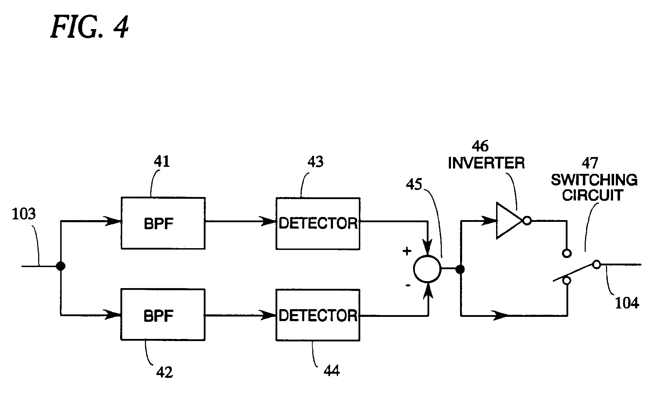

Fig. 4 is a schematic diagram showing the constitution of the tracking error detector 2 in Fig. 1. While the head 1a scans the track of pilot signal f0, frequency components of pilot signals f1 and f2 of adjacent right and left tracks which are crosstalking are extracted by bandpass filters 41 and 42, and their amplitudes are detected by detectors 43 and 44, and the difference of f1 component and f2 component is determined by a subtractor 45. This differential signal directly passes through a switch circuit 47, and appears at the output side as tracking error signal 104.

On the other hand, while the head 1b is scanning the tracks of f0, f1, deviation cannot be detected, and the output is fixed in this period by using the HSW signal 105. In this example, however, since the signal in this period is not used as described later, such processing is not essential. Besides, since the configuration of the pilot signals f1, f2 as seen from the head 1a is inverted in every scanning, the polarity of the error signal is inverted in every scanning by using an inverter 46 and switch circuit 47 before producing the output. Examples of waveforms of reproduced signal 103 and tracking error signal 104 are shown in Figs. 3 (b), (c). A waveform depending on the track bending appears in the tracking error signal 104.

The control signal generator 3 receives the tracking error signal 104 and HSW signal 105, detects the track bending, and produces a corresponding control signal 106. In this example, the control signal generator 3 is composed of a microprocessor which comprises A/D converter, D/A converter, ROM, RAM, timer and CPU integrated in one chip. The operation is described in detail later.

The tracking controller 4 control tracking by a control signal 106. In this example, tracking control is realized as the capstan controller adjusts the tape speed depending on the control signal 106.

The digital signal processing unit 15 receives the reproduced signal 103, and processes it by binary coding, clock generation, demodulation, error correction, etc., and produces a reproduced video signal and a reproduced audio signal.

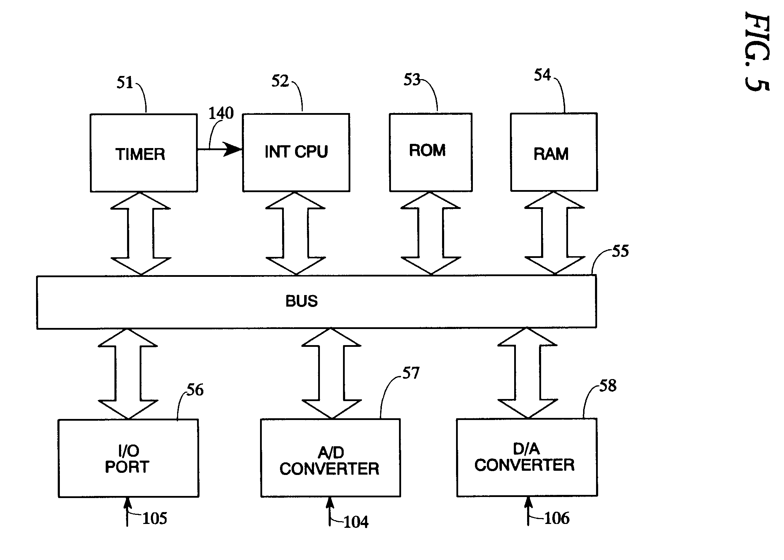

Fig. 5 is a block diagram of the microcomputer which composes the control signal generator 3. It comprises timer 51, CPU 52, ROM 53, RAM 54, I/O port 56, A/D converter 57, and D/A converter 58, and the CPU 52 and other units exchange data through a bus 55. The CPU 52 carries out the processing according to the program stored in the ROM 53.

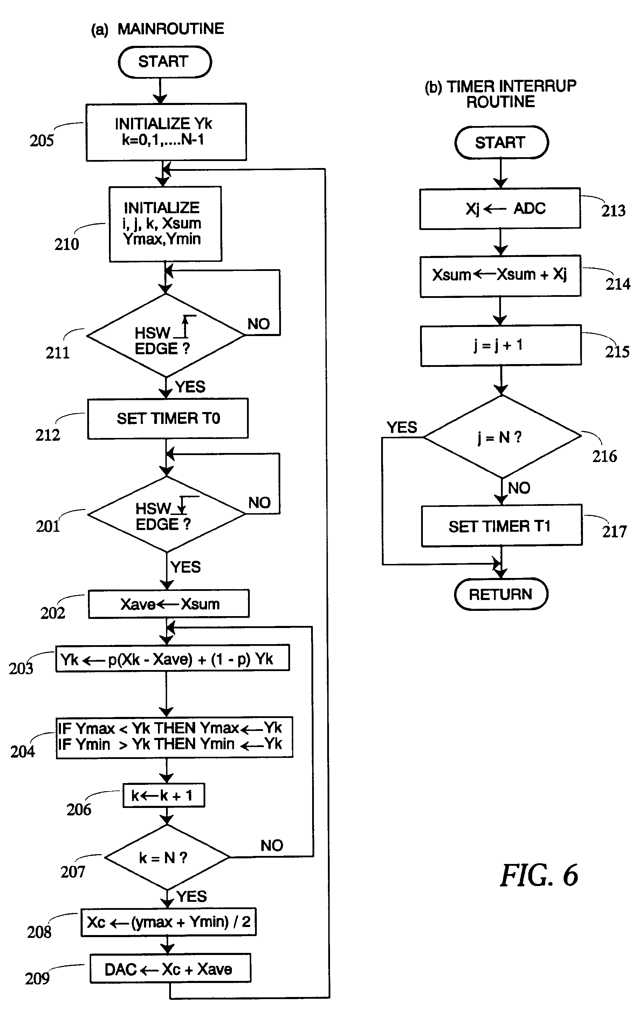

Fig. 6 is a flow chart showing the outline of the program stored in the ROM 53. Chart (a) relates to a main routine, and (b) is a timer interrupt routine. The timer 51 is set in a specific value by the program, and issues an interrupt signal 140 after the expiration of the set time. The CPU 52 usually executes the main routine sequentially, but when an interrupt signal is issued, it temporarily stops the processing of the main routine, and processes the timer interrupt routine. The operation is as follows. First, the content of the RAM 54 to be used at steps 205, 210 is initialized. All of Yk (k=0, 1, ..., N-1), and i. j, k, Xsum are set to 0. Ymax and Ymin are preset in the minimum value and maximum value of the output dynamic range of the A/D converter 57, respectively. At step 211, monitoring the value of the HSW signal 105 connected to the I/O port 56, the waiting state continues until a rising edge is detected. At step 212, the value corresponding to T0 shown in Fig. 3 (d) is set in the timer 51. At step 201, contrary to step 211, a falling edge of the HSW signal 105 is awaited. In this period, a timer interrupt occurs, and the timer interrupt rupt routine shown in Fig. 6 (b) is executed.

In the interrupt processing, the sum of sampling of tracking error signal 104 and sample values in one scanning is calculated. First, at step 213, the value of tracking error signal 104 is read into RAM (Xj) through the A/D converter 57. At step 214, the value of (Xj) is added to RAM (Xsum). At step 215, the RAM (j) is incremented. Step 217 is to set a value corresponding to the T1 period in Fig. 3 (d) in the timer in order to generate a next timer interrupt. However, if the value of j at step 216 is equal to N (N being a positive integer constant. N=5 in this example), it is judged that processing for one scanning is over, and step 217 is skipped. In this way, the timer interrupt processing is over, and the execution returns to the main routine. In this process, the timer interrupt occurs repeatedly in the timing as shown in Fig. 3 (d) in the high level period of the HSW signal 105, that is, while the head 1a is scanning the track of f0. As a result, when one scanning period is over, the sample values Xj (j=0, 1, ..., N-1) of the tracking error signal 104 at each timing and their sum Xsum are obtained.

When the fall of HSW signal 105 is detected at step 201 of the main routine, Xsum/N is calculated at step 202, and the result is stored in the RAM (Xave). This is the average of the sample values of tracking error signals obtained in one scanning. Steps 203, 204, 206, and 207 are the processing for detecting track bending. Being counted up from k=1 to N=1 at steps 206 and 207, steps 203 and 204 are repeatedly executed for each k value. Step 203 is responsible for low pass filter processing in order to remove noise, in the substantial track bending portions subtracting the average Xave from each sample value Xj. Track bending is often caused by rotation of the cylinder 5, and the correlation in each scanning is strong. By making use of this fact, filter processing is done. Herein, the coefficient p is a constant defined in 0 < p ≦ 1. When p is closer to 0, the noise removing effect is greater, but the convergence is slower. To the contrary, as closer to 1, the convergence is fast, but the noise removing effect is small. It is therefore preferred to determine the value of p depending on the situation of track bending in the recording medium applied (the ratio of period component and other components), and the quality level of the detected tracking error signal 104. The sample value after processing is Yk (k=0, 1, ..., N-1). Step 204 is for detecting the maximum value Ymax and minimum value Ymin of Yk.

Step 208 is the process for calculating the correction amount from the filtered track bending information Yk. The principle of this calculation is as follows. Usually, the head used in reproduction is broader than the track width, and if the track bending is (head width - track width) or less, it is possible that the signal may be reproduced without lowering of level. Actually, however, when tracking control works to render the average of tracking error signal to zero, lowering of signal level may occur depending on the case. This is the phenomenon occurring when the center of track bending does not coincide with the average of tracking error signal. Searching for the center of track bending, when tracking control works for this target, lowering of reproduced signal amplitude may be eliminated. Or, if there is a track bending exceeding (head width - track width), lowering of amplitude may be suppressed to minimum. In digital signal reproduction, generally, an error correction code is preliminarily added to the recorded signal, and it is used when reproducing to correct error, and within its correction capacity range, there is no effect on the final reproduction output, that is, reproduced video signal and reproduced audio signal in this case. Therefore, to suppress the lowering of reproduced signal amplitude to minimum is effective to make the final reproduced output quality less susceptible to the effect of track bending. Since the average Xave has been preliminarily subtracted from each sample at step 203, the correction amount Xc is the difference from the center of track bending on the basis of Xave, that is, the difference between the average and the center of track bending. The correction amount Xc and tracking error signal are combined at step 209. It is realized herein by the addition of the average Xave of tracking error signal in one scanning and Xc. The obtained sum is issued as output signal 106 through the D/A converter 58. Returning to step 210 after a series of processing in this way, the content of the RAM is initialized to wait for start of next scanning.

According to the embodiment, thus, the correction amount of the tracking position depending on track bending is detected in the control signal generator 3, and it is combined with the tracking error signal, and the tracking controller 4 operates on the basis of this combined value, and therefore the effect of track bending on the reproduced signal amplitude may be kept to a minimum limit. In addition, since the correction amount is updated in every scanning of the head 1a, the response is quick, and basically an arbitrary response is obtained by the filter coefficient p.

Combining of the correction amount Xc and tracking error signal is not limited to the method disclosed in this example, as far as the target position of tracking control is corrected by the correction amount. For example, skipping step 209, right after step 213, (Xc + Xj) may be produced through the D/A converter 58. Thus, the delay time from sampling to output is shortened, and delaying by averaging does not take place, and hence the response the tracking control can be accelerated.

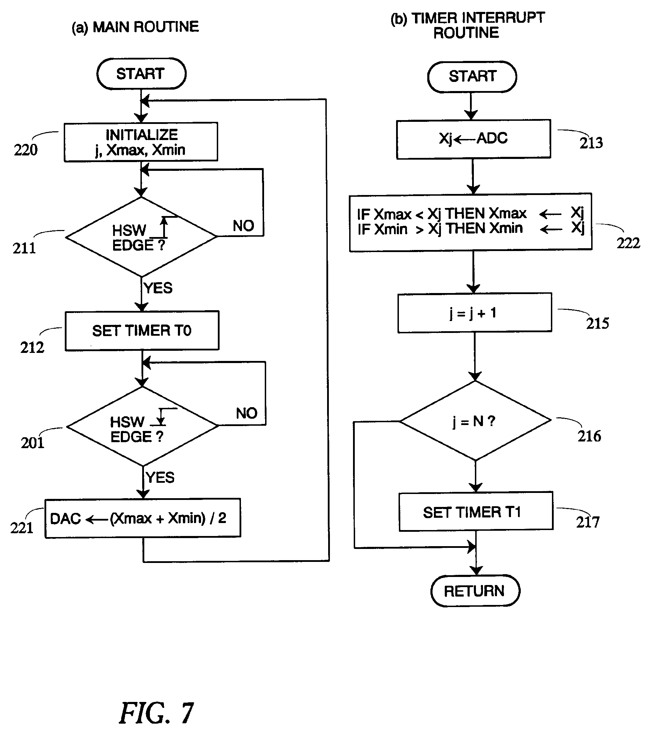

Other embodiment is described below by reference to Fig. 6. The general constitution is similar to Fig. 1, except that only the program of the microcomputer composing the control signal generator 3 is different. A flow chart of the program is shown in Fig. 7. Fig. 7 (a) relates to a main routine, and (b) shows a timer interrupt routine. In the main routine, the RAM to be used is initialized at step 220. Supposing j to be 0, Xmax and Xmin are respectively preset at the minimum and maximum of the output dynamic range of the D/A converter 57. The act ions at step 211, 212, 201 are same as in the case in Fig. 6, and the timer 51 is set by waiting for the rising edge of the HSW signal 105. While waiting for the falling edge of the HSW signal 105 at step 201, a timer interrupt occurs. In the timer interrupt routine (b), the tracking error signal 104 is stored in Xj through the A/D converter 57 at step 213, and the maximum Xmax and minimum Xmin in one scanning are detected at step 222. Steps 215, 216, 217 are timer setting process for next timer interrupt same as in the case in Fig. 6. In this case, too, the interrupt timing is as shown in Fig. 3 (d), and, returning to the main routine, when the falling edge of the HSW signal 105 is detected at step 201, the maximum and minimum of Xj are obtained in Xmax and Xmin. At step 221, calculating the average of Xmax and Xmin, that is, the value corresponding to the center of track bending, as the target of tracking control, and it is produced through the D/A converter 58.

Thus, in this embodiment, by detecting the maximum and minimum of the tracking error signal in one scanning period in the control signal generator 3, and by producing their average as the control signal, the effect of track bending on the reproduced signal amplitude can be suppressed to the minimum limit. Besides, the response is fast because the correction amount is set in every scanning of the head 1a. Comparing with the example in Fig. 6, filter processing is not included, and the RAM for storing the sample value is not necessary. It is particularly effective in the case where the quality of tracking error signal is relatively high, or in the system of small periodicity of track bending.

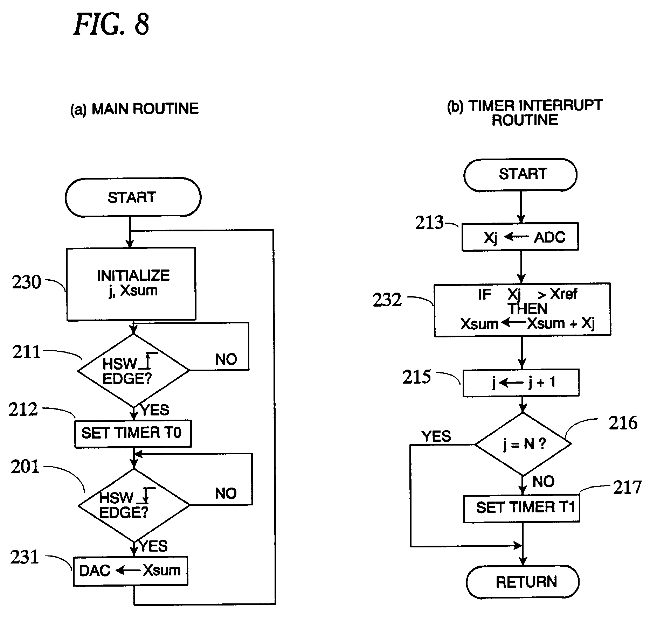

A different embodiment is explained below by reference to Fig. 8. In the foregoing two embodiments, basically, the control signal was created in order to eliminate lowering of reproduced signal amplitude due to track bending, or to minimize the maximum lowering value, but if lowering of the reproduction amplitude is inevitable due to large bending of track, the following method is also effective. The general constitution is same as shown in Fig. 1, but only the program of the microcomputer for composing the control signal generator 3 is different. Fig. 8 shows a flow chart of the program. Fig. 8 (a) relates to a main routine, and (b) is a timer interrupt routine. In the main routine, the RAM to be used is initialized at step 230. Both j and Xsum are supposed to be 0. Actions at steps 211, 212, 201 are same as in the example in Fig. 6, that is, the timer 51 is set by waiting for the rising edge of the HSW signal 105. While waiting for the falling edge of HSW signal 105 at step 201, a timer interrupt occurs. In the timer interrupt routine (b), the tracking error signal 104 is stored in Xj through the A/D converter 57 at step 213, and only when the absolute value of Xj at step 232 is greater than a constant Xref, Xj is added to Xsum. Steps 215, 216, 217 are timer setting process for next timer interrupt same as in the case in Fig. 6. In this case, too, the interrupt timing is as shown in Fig. 3 (d). Returning to the main routine, Xsum is produced as control signal through the D/A converter 58 at step 231. Herein, as Xref, for example, when a value corresponding to (head width - track width)/2 is selected, it actually acts to suppress the sum (integrated value) of one scanning period of the lowered portion of the reproduced signal amplitude. Or in the case of the tracking error amplitude corresponding to the amplitude in which the effect may appear in the quality after demodulation of the reproduced signal as Xref (for example, the clock reproduction PLL is deviated, or the error rate exceeds the correction limit), it acts to actually suppress the effect on the quality of reproduced output. Incidentally, the addition processing at step 232 may be set so that the extra portion of the absolute value of Xj surpassing Xref may be added to Xsum.

In this way, according to the embodiment, the control signal generator 3 produces the value corresponding to the tracking error signal in the period when the absolute value in one scanning period is over a specific value, as the control value, and therefore tracking control is substantially performed by aiming at the position where the effect on the reproduced output may be finally suppressed. Since the control signal is set in one scanning, fast response is possible.

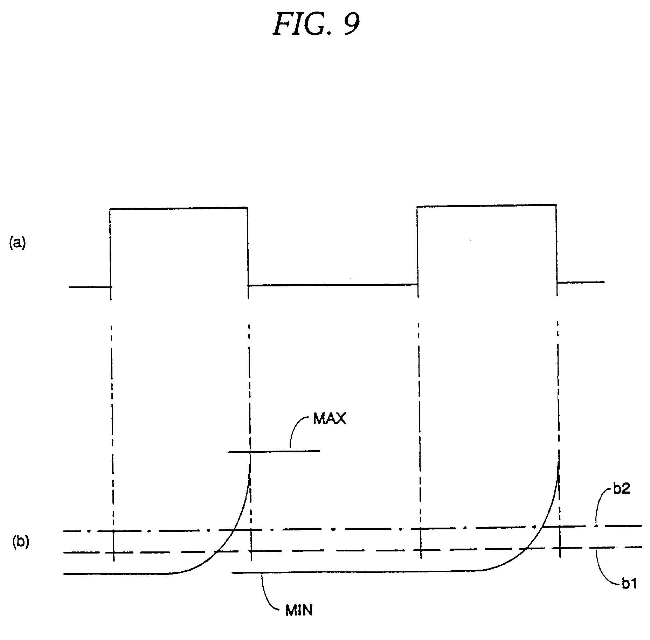

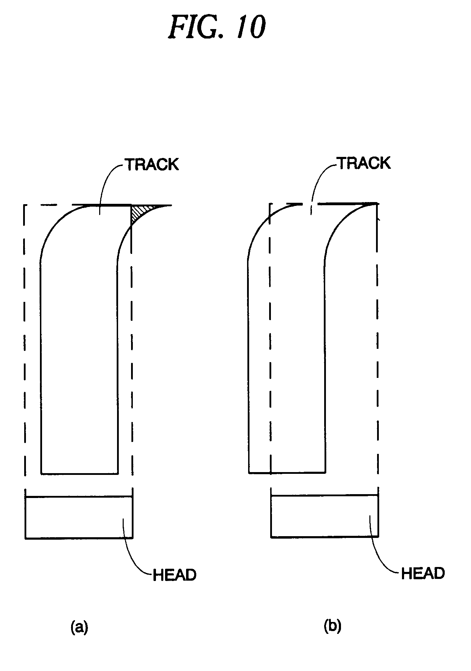

So far are explained various examples of the control signal generator 3 which is the vital part in tracking control of the information reproducing apparatus in the invention. To further clarify the effect of the invention, it is compared with the conventional control method by reference to Figs. 9 and 10.

Fig. 9 is a waveform diagram for explaining the action of tracking control of the invention. Fig. 10 is a schematic diagram for explaining the tracking state of the head. In Fig. 9, (a) shows the head switch signal HSW 105 for distinguishing the head, and (b) denotes tracking error signal 104. The waveform diagram in Fig. 9 indicates that a large track curvature occurs near the terminal end of track. Broken line b1 represents the average of tracking error in one scanning, and single dot chain line b2 refers to the average of maximum and minimum of tracking error. The general control operates in the center of control of broken line bl so that the DC component of tracking error may be 0. As a result, the tracking error increases upward, and the reproduced output signal in that area is largely lowered.

In the apparatus for reproducing analog information, the S/N of the reproduced signal determines the S/N after final demodulation, and the average control indicated by broken line b1 is desired so that a favorable S/N may be obtained in the majority of the track. In the apparatus for reproducing digital information, on the other hand, in the range as far as the digital data is normally reproduced, or the error correction is possible, the tracking position itself does not affect the final quality of output signal. That is, it is not the control for minimizing the tracking error, but it is important to control so that the tracking may not go out of the range in which the digital data can be reproduced normally or error correction is possible, and the control to decrease the maximum value of lowering of reproduced signal amplitude is necessary. To minimize the lowering of reproduced signal, it is one method to distribute the magnitude of the residual tracking error equally on both polarities as in this embodiment. The single dot chain line b2 indicates such control signal.

Fig. 10 shows the difference in tracking state by these two control methods. In Fig. 10, the track curvature is schematically shown. The head scanning trace by the control system of the conventional average action type is indicated by broken line in Fig. 10 (a), and the head scanning trace by the control system of this embodiment is indicated by broken line in Fig. 10 (b). According to the conventional control system, as shown in Fig. 10 (a), the recording track is largely out of the head scanning trace as indicated by shaded area, and the reproduced signal amplitude is lowered, and error correction is disabled in digital recording, but in the case of the control system of the embodiment, as shown in Fig. 10 (b), the head scans the recording track without producing error correction disabled region.

As explained herein, the invention presents an information reproducing apparatus capable of reproducing the information normally by the error correction function if there is curvature of the recording track in digital recording, and as far as this object is achieved, the form of the tracking control signal is not limited to the forms shows in the foregoing embodiments.

Incidentally, the embodiments are mere examples of the invention and are not limitative. In the control signal generator 3, the number of sampling points N in one scanning period (N=5 in the embodiment) is preferred to be as many as possible as far as permitted by the processing time of the microcomputer because the detecting precision of bending can be raised, but as far as the track bending can be detected satisfactorily, the number may be 3 or larger integer. The processing is not limited to the flow chart, either. The timer interrupt is not absolutely necessary, and filter processing or the like may be added as required. Detection processing of track bending is not required in every scanning, and it may be detected intermittently in the system where the track bending does not change suddenly in a short time. One full scanning period may not be always the object of detection of track bending, and a specific region may be detected depending on the purpose of reproduction (for example, the video signal recorded region). It is not always required to compose by microcomputer, but any hardware operating equivalently may be employed. To the contrary, other element than the control signal generator may be realized as the software on the same or different microcomputer.

The head configuration on the cylinder 5 is not limited to the illustrated example.

In the embodiments, two kinds of pilot signal for tracking are shown, but pilot signals of four different frequencies as in 8 mm video tape recorder may be used, and the number of frequencies and array of pilot signals are not limitative. Or, as in DAT, the region for recording only pilot signals may be provided discretely at plural positions in one track, but in order to detect track bending, it is preferred to record pilot signals continuously in a wide range in the track as far as possible.

The data composition in the track may include control information such as address information, aside from the video and audio information, and other information may be also included.

The tracking control means may include means for moving the head on the cylinder in its heightwise direction. The invention is, however, particularly effective when head scanning cannot follow up the track bending as in tape traveling by capstan.

The present embodiments are therefore to be considered in all respects as illustrative and not restrictive, the scope of the invention being indicated by the appended claims rather than by the foregoing description and all changes which come within the scope of the claims are therefore intended to be embraced therein.

## Claims

1. An information reproducing apparatus for reproducing information which has been recorded on slant tracks on a magnetic recording medium (8) together with a tracking pilot signal, comprising:
at least one magnetic head (1a,1b) provided on a rotary cylinder (5) for scanning said information recorded on said magnetic medium (8);
tracking error detecting means (2) for detecting a tracking error of said magnetic head when scanning said slant tracks and generating a tracking error signal (104) by evaluating said recorded pilot signals;
control signal generating means (3) for producing a control signal (106) which controls the scanning position of said at least one magnetic head in response to the tracking error signal (104), depending on the bending pattern of a slant track indicated by the tracking error signal (104); and
tracking control means (4) for adjusting the scanning position of said at least one magnetic head in response to said control signal (106);
**characterised in that**
said control signal generating means (3) executes the following steps for producing said control signal (106) to control said tracking control means (4):
calculating a maximum value (Xₘₐₓ) and a minimum value (Xₘᵢₙ) of said tracking error signal (104) within a specific scanning period and
generating said control signal (106) corresponding to the average value of said maximum value (Xₘₐₓ) and said minimum value (Xₘᵢₙ).

2. An information reproducing apparatus for reproducing information which has been recorded on slant tracks on a magnetic recording medium (8) together with a tracking pilot signal, comprising:
at least one magnetic head (1a,1b) provided on a rotary cylinder (5) for scanning said information recorded on said magnetic medium (8);
tracking error detecting means (2) for detecting a tracking error of said magnetic head when scanning said slant tracks and generating a tracking error signal (104) by evaluating said recorded pilot signals;
control signal generating means (3) for producing a control signal (106) which controls the scanning position of said at least one magnetic head in response to the tracking error signal (104), depending on the bending pattern of a slant track as indicated by the tracking error signal; and
tracking control means (4) for adjusting the scanning position of said at least one magnetic head in response to said control signal (106);
**characterised in that**
said control signal generating means (3) executes the following steps for producing said control signal (106) to control said tracking control means (4):
calculating a sum (Xₛᵤₘ) of all scanned values (Xⱼ) of said tracking error signal (104) which exceed a predetermined constant value (X_{ref}) within said specific scanning period and
generating said control signal (106) corresponding to said calculated sum (Xₛᵤₘ).

3. An information reproducing apparatus for reproducing information which has been recorded on slant tracks on a magnetic recording medium (8) together with a tracking pilot signal, comprising:
at least one magnetic head (1a,1b) provided on a rotary cylinder (5) for scanning said information recorded on said magnetic medium (8);
tracking error detecting means (2) for detecting a tracking error of said magnetic head when scanning said slant tracks and generating a tracking error signal (104) by evaluating said recorded pilot signals;
control signal generating means (3) for producing a control signal (106) which controls the scanning position of said at least one magnetic head in response to the tracking error signal (104) by detecting a correction amount of a tracking position, depending on the bending of a slant track by the tracking error signal (104); and
tracking control means (4) for adjusting the scanning position of said at least one magnetic head in response to said control signal (106);
**characterised in that**
said control signal generating means (3) executes the following steps for producing said control signal (106) to control said tracking control means (4):
calculating an average value (Xₐᵥₑ) of all scanned values (Xⱼ) of said tracking error signal (104) within said specific scanning period,
calculating sample values (Yₖ) by subtracting said average value (Xₐᵥₑ) from each of said scanned values (Xⱼ),
calculating a maximum value (Yₘₐₓ) and a minimum value (Yₘᵢₙ) of said calculated sample values (Yₖ),
calculating a correction value (X_{c}) by calculating an average value of said maximum value (Yₘₐₓ) and said minimum value (Yₘᵢₙ) and
generating said control signal (106) corresponding to a sum of said average value (Xₐᵥₑ) and said correction value (X_{c}).

4. An information reproducing apparatus according to any preceding claim
**characterised in that**
said tracking pilot signal is continuously recorded in the region corresponding to said specific scanning period.

5. An information producing apparatus according to any preceding claim
**characterised in that**
said tracking control means (4) controls tracking by adjusting the rotation of a capstan on the basis of said control signal (106).

## Patentansprüche

1. Informationswiedergabevorrichtung zum Wiedergeben von Informationen, die auf schrägen Spuren auf einem magnetischen Aufzeichungsmedium (8) zusammen mit einem Spurungspilotsignal aufgezeichnet worden sind, die aufweist:
mindestens einen magnetischen Kopf (1a, 1b), der auf einem Drehzylinder (5) zum Abtasten der Informationen, die auf dem magnetischen Medium (8) aufgezeichnet sind, vorgesehen ist;
eine Spurungsfehlererfassungseinrichtung (2) zum Erfassen eines Spurungsfehlers des magnetischen Kopfs, wenn die schrägen Spuren abgetastet werden, und zum Erzeugen eines Spurungsfehlersignals (104) durch Evaluieren der aufgezeichneten Pilotsignale;
eine Steuersignalerzeugungseinrichtung (3) zum Produzieren eines Steuersignals (106), das die Abtastposition des mindestens einen magnetischen Kopfs auf das Spurungsfehlersignal (104) hin, in Abhängigkeit von dem Biegemuster einer schrägen Spur, angezeigt durch das Spurungsfehlersignal (104), steuert, und
eine Spurungsteuereinrichtung (4) zum Einstellen der Abtastposition des mindestens einen magnetischen Kopfs auf das Steuersignal (106) hin;
dadurch gekennzeichnet, daß
die Steuersignalerzeugungseinrichtung (3) die folgenden Schritte zum Produzieren des Steuersignals (106) ausführt, um die Spurungssteuereinrichtung (4) zu steuern:
Berechnen eines maximalen Werts (Xₘₐₓ) und eines minimalen Werts (Xₘᵢₙ) des Spurunsfehlersignals (104) innerhalb einer spezifischen Abtastperiode, und
Erzeugen des Steuersignals (106) entsprechend zum durchschnittlichen Wert des maximalen Werts (Xₘₐₓ) und des minimalen Werts (Xₘᵢₙ).

2. Informationswiedergabevorrichtung zum Wiedergeben von Informationen, die auf schrägen Spuren auf einem magnetischen Aufzeichungsmedium (8) zusammen mit einem Spurungspilotsignal aufgezeichnet worden sind, die aufweist:
mindestens einen magnetischen Kopf (1a, 1b), der auf einem Drehzylinder (5) zum Abtasten der Informationen, die auf dem magnetischen Medium (8) aufgezeichnet sind, vorgesehen ist;
eine Spurungsfehlererfassungseinrichtung (2) zum Erfassen eines Spurungsfehlers des magnetischen Kopfs, wenn die schrägen Spuren abgetastet werden, und zum Erzeugen eines Spurungsfehlersignals durch Evaluieren der aufgezeichneten Pilotsignale;
eine Steuersignalerzeugungseinrichtung (3) zum Produzieren eines Steuersignals (106), das die Abtastposition des mindestens einen magnetischen Kopfs auf das Spurungsfehlersignal (104) hin, in Abhängigkeit von dem Biegemuster einer schrägen Spur, wie dies durch das Spurungsfehlersignal (104) angezeigt ist, steuert; und
eine Spurungsteuereinrichtung (4) zum Einstellen der Abtastposition des mindestens einen magnetischen Kopfs auf das Steuersignal (106) hin;
dadurch gekennzeichnet, daß
die Steuersignalerzeugungseinrichtung (3) die folgenden Schritte zum Produzieren des Steuersignals (106) ausführt, um die Spurungssteuereinrichtung (4) zu steuern:
Berechnen einer Summe (Xₛᵤₘ) aller abgetasteten Werte (Xⱼ) des Spurungsfehlersignals (104), die einen vorbestimmten, konstanten Wert (X_{ref}) innerhalb der spezifischen Abtastperiode übersteigen, und
Erzeugen des Steuersignals (106) entsprechend der berechneten Summe (Xₛᵤₘ).

3. Informationswiedergabevorrichtung zum Wiedergeben von Informationen, die auf schrägen Spuren auf einem magnetischen Aufzeichungsmedium (8) zusammen mit einem Spurungspilotsignal aufgezeichnet worden sind, die aufweist:
mindestens einen magnetischen Kopf (1a, 1b), der auf einem Drehzylinder (5) zum Abtasten der Informationen, die auf dem magnetischen Medium aufgezeichnet sind, vorgesehen ist;
eine Spurungsfehlererfassungseinrichtung (2) zum Erfassen eines Spurungsfehlers des magnetischen Kopfs, wenn die schrägen Spuren abgetastet werden, und zum Erzeugen eines Spurungsfehlersignals (104) durch Evaluieren der aufgezeichneten Pilotsignale;
eine Steuersignalerzeugungseinrichtung (3) zum Produzieren eines Steuersignals (106), das die Abtastposition des mindestens einen magnetischen Kopfs auf das Spurungsfehlersignal (104) hin durch Erfassen eines Korrekturbetrags der Spurungsposition, in Abhängigkeit von der Biegung einer schrägen Spur durch das Spurungsfehlersignal (104), steuert; und
eine Spurungsteuereinrichtung (4) zum Einstellen der Abtastposition des mindestens einen magnetischen Kopfs auf das Steuersignal (106) hin;
dadurch gekennzeichnet, daß
die Steuersignalerzeugungseinrichtung (3) die folgenden Schritte zum Produzieren des Steuersignals (106) ausführt, um die Spurungssteuereinrichtung (4) zu steuern:
Berechnen eines durchschnittlichen Werts (Xₐᵥₑ) aller abgetasteten Werte (Xⱼ) des Spurunsfehlersignals (104) innerhalb der spezifischen Abtastperiode,
Berechnen von Abtastwerten (Yₖ) durch Subtrahieren des durchschnittlichen Werts (Xₐᵥₑ) von jedem der abgetasteten Werte (Xⱼ).
Berechnen eines maximalen Werts (Yₘₐₓ) und eines minimalen Werts (Yₘᵢₙ) der berechneten Abtastwerte (Yₖ),
Berechnen eines Korrekturwerts (X_{c}) durch Berechnen eines durchschnittlichen Werts des maximalen Werts (Yₘₐₓ) und des minimalen Werts (Yₘᵢₙ) und
Erzeugen des Steuersignals (106) entsprechend einer Summe des durchschnittlichen Werts (Xₐᵥₑ) und des Korrekturwerts (X_{c}).

4. Informationswiedergabevorrichtung nach einem vorhergehenden Anspruch,
dadurch gekennzeichnet, daß
das Spurungspilotsignal kontinuierlich in dem Bereich entsprechend der spezifischen Abtastperiode aufgezeichnet ist.

5. Informationswiedergabevorrichtung nach einem vorhergehenden Anspruch,
dadurch gekennzeichnet, daß
die Spurungssteuereinrichtung (4) eine Spurung durch Einstellen der Drehung einer Capstanrolle auf der Basis des Steuersignals (106) steuert.

## Revendications

1. Dispositif de reproduction d'informations pour reproduire des informations qui ont été enregistrées sur des pistes en biais sur un support d'enregistrement magnétique (8) en même temps qu'un signal de pilotage de suivi de piste, comprenant :
au moins une tête magnétique (1a, 1b) disposée sur un cylindre rotatif (5) pour balayer lesdites informations enregistrées sur ledit support magnétique (8) ;
des moyens de détection d'erreur de suivi de piste (2) pour détecter une erreur de suivi de piste de ladite tête magnétique lors du balayage desdites pistes en biais et pour produire un signal d'erreur de suivi de piste (104) en évaluant lesdits signaux de pilotage enregistrés ;
des moyens de production de signal de commande (3) pour produire un signal de commande (106) qui commande la position de balayage de ladite au moins une tête magnétique en réponse au signal d'erreur de suivi de piste (104), en fonction du motif d'inclinaison d'une piste en biais indiqué par le signal d'erreur de suivi de piste (104) ; et
des moyens de commande de suivi de piste (4) pour ajuster la position de balayage de ladite au moins une tête magnétique en réponse audit signal de commande (106) ;
**caractérisé en ce que**
lesdits moyens de production de signal de commande (3) exécutent les étapes suivantes pour produire ledit signal de commande (106) pour commander lesdits moyens de commande de suivi de piste (4) :
calcul d'une valeur maximale (Xₘₐₓ) et d'une valeur minimale (Xₘᵢₙ) dudit signal d'erreur de suivi de piste (104) dans une période de balayage spécifique, et
production dudit signal de commande (106) correspondant à la valeur moyenne de ladite valeur maximale (Xₘₐₓ) et de ladite valeur minimale (Xₘᵢₙ).

2. Dispositif de reproduction d'informations pour reproduire des informations qui ont été enregistrées sur des pistes en biais sur un support d'enregistrement magnétique (8) en même temps qu'un signal de pilotage de suivi de piste, comprenant :
au moins une tête magnétique (1a, 1b) disposée sur un cylindre rotatif (5) pour balayer lesdites informations enregistrées sur ledit support magnétique (8) ;
des moyens de détection d'erreur de suivi de piste (2) pour détecter une erreur de suivi de piste de ladite tête magnétique lors du balayage desdites pistes en biais et pour produire un signal d'erreur de suivi de piste (104) en évaluant lesdits signaux de pilotage enregistrés ;
des moyens de production de signal de commande (3) pour produire un signal de commande (106) qui commande la position de balayage de ladite au moins une tête magnétique en réponse au signal d'erreur de suivi de piste (104), en fonction du motif d'inclinaison d'une piste en biais indiqué par le signal d'erreur de suivi de piste ; et
des moyens de commande de suivi de piste (4) pour ajuster la position de balayage de ladite au moins une tête magnétique en réponse audit signal de commande (106) ;
**caractérisé en ce que**
lesdits moyens de production de signal de commande (3) exécutent les étapes suivantes pour produire ledit signal de commande (106) pour commander lesdits moyens de commande de suivi de piste (4) :
calcul d'une somme (Xₛᵤₘ) de toutes les valeurs balayées (Xⱼ) dudit signal d'erreur de suivi de piste (104) qui dépassent une valeur constante prédéterminée (X_{ref}) dans ladite période de balayage spécifique, et
production dudit signal de commande (106) correspondant à ladite somme calculée (Xₛᵤₘ).

3. Dispositif de reproduction d'informations pour reproduire des informations qui ont été enregistrées sur des pistes en biais sur un support d'enregistrement magnétique (8) en même temps qu'un signal de pilotage de suivi de piste, comprenant :
au moins une tête magnétique (1a, 1b) disposée sur un cylindre rotatif (5) pour balayer lesdites informations enregistrées sur ledit support magnétique (8) ;
des moyens de détection d'erreur de suivi de piste (2) pour détecter une erreur de suivi de piste de ladite tête magnétique lors du balayage desdites pistes en biais et pour produire un signal d'erreur de suivi de piste (104) en évaluant lesdits signaux de pilotage enregistrés ;
des moyens de production de signal de commande (3) pour produire un signal de commande (106) qui commande la position de balayage de ladite au moins une tête magnétique en réponse au signal d'erreur de suivi de piste (104) en détectant une quantité de correction d'une position de suivi de piste, en fonction de l'inclinaison d'une piste en biais par le signal d'erreur de suivi de piste (104) ; et
des moyens de commande de suivi de piste (4) pour ajuster la position de balayage de ladite au moins une tête magnétique en réponse audit signal de commande (106) ;
**caractérisé en ce que**
lesdits moyens de production de signal de commande (3) exécutent les étapes suivantes pour produire ledit signal de commande (106) pour commander lesdits moyens de commande de suivi de piste (4) :
calcul d'une valeur moyenne (Xₐᵥₑ) de toutes les valeurs balayées (Xⱼ) dudit signal d'erreur de suivi de piste (104) dans ladite période de balayage spécifique,
calcul de valeurs d'échantillonnage (Yₖ) en soustrayant ladite valeur moyenne (Xₐᵥₑ) de chacune desdites valeurs balayées (Xⱼ),
calcul d'une valeur maximale (Yₘₐₓ) et d'une valeur minimale (Yₘᵢₙ) desdites valeurs d'échantillonnage calculées (Yₖ),
calcul d'une valeur de correction (X_{c}) en calculant une valeur moyenne de ladite valeur maximale (Yₘₐₓ) et de ladite valeur minimale (Yₘᵢₙ), et
production dudit signal de commande (106) correspondant à une somme de ladite valeur moyenne (Xₐᵥₑ) et de ladite valeur de correction (X_{c}).

4. Dispositif de reproduction d'informations selon l'une quelconque des revendications précédentes,
**caractérisé en ce que**
ledit signal de pilotage de suivi de piste est enregistré en continu dans la zone correspondant à ladite période de balayage spécifique.

5. Dispositif de reproduction d'informations selon l'une quelconque des revendications précédentes,
**caractérisé en ce que**
lesdits moyens de commande de suivi de piste (4) commandent le suivi de piste en ajustant la rotation d'un cabestan sur la base dudit signal de commande (106).
